# EUROPEAN PATENT SPECIFICATION

(11) **EP 2 211 481 B1**
(45) Date of publication and mention of the grant of the patent: **10.09.2014**
(21) Application number: 09290053.9
(22) Date of filing: 26.01.2009
(51) Int. Cl.: H04B 5/00, H04B 5/06

(54) **Wireless communication device for providing at least one near field communication service**
Drahtlose Kommunikationsvorrichtung zur Bereitstellung von mindestens einem Nahfeld-Kommunikationsdienst
Dispositif de communication sans fil pour fournir au moins un service de communication à champ proche

(43) Date of publication of application: 28.07.2010
(60) Divisional application: 14180232.2
(73) Proprietor: Motorola Mobility LLC, Libertyville, IL 60048 (US)
(72) Inventor: Buhot, Thomas, Toulouse 31400 (FR); Badvel, Jayabharath Reddy B., Chittoor, AP 517001 (IN); Deo, Sandeep, Plantation, FL 33324 (US)
(74) Representative: Boult Wade Tennant

(56) References cited:
- EP-A- 1 798 867
- EP-A- 1 814 239
- WO-A-2006/095212
- WO-A-2007/012909
- WO-A-2008/071924
- US-A1- 2008 191 892

## Description

### Field of the Disclosure

This disclosure relates to a wireless communication device for providing at least one Near Field Communication service to a user and a method for updating at least one Near Field Communication service to be provided by a wireless communication device.

### Background of the Disclosure

Near Field Communication (NFC) is a short-range wireless communication technology which enables the exchange of data between devices allowing users of NFC enabled devices to use NFC services such as performing contactless transactions, accessing digital content and connecting devices with a single touch.

NFC is based on contactless and Radio Frequency Identification (RFID) solutions, which typically consist of a tag or device storing a small amount of data and a reader. The reader, when activated, emits a short-range radio signal that when brought next to the tag, powers up a microchip on the tag, and allows for reading a small amount of data that is stored on the tag. However, NFC is different from other contactless or RFID technologies in that it has a very short operating distance and also allows two devices to interconnect. The effective distance of an NFC solution depends on the tag design and the reader, but is typically only a few centimetres. The underlying layers of NFC technology are based on ISO/IEC 14443, ECMA 340, ECMA 352, ETSI 102 613, and NFC forum standards.

Investigations are being performed into the use of NFC in mobile phones. The current main use cases for NFC in a mobile phone include:
Card emulation - the NFC enabled device can behave like an existing contactless NFC card;
Reader mode: the NFC enabled device can read a passive NFC tag, for example for interactive advertising;
Peer-to-Peer (P2P) mode: two NFC enabled devices can communicate together and exchanging information e.g. to set up a Bluetooth connection.

Examples of the different types of NFC services that may be available to an user of a mobile phone having NFC capability include:
Ticketing services such as mobile ticketing in public transport which is an extension of the existing contactless infrastructure, and electronic ticketing such as for airline tickets, concert/event tickets;
Payment services where for example the mobile phone acts as a debit/credit payment card or possibly electronic money;
Advertising services where for example the mobile phone is used to read NFC tags on advertising boards in order to access information easily whilst on the move;
Exchanging small amounts of data quickly such as electronic business cards, calendar synchronisation;
Bluetooth or Wi-Fi pairing where for example the process of activating Bluetooth or Wi-Fi between two devices can be achieved by a simple "touch" of the devices and thereafter communication takes place over a Bluetooth or Wi-Fi communication link;
Loyalty services, for example, the mobile phone acts as a loyalty card; and
Identity services, for example, the mobile phone acts as an identity card or key.

A mobile phone that supports NFC, and for example the card emulation mode, contains a secure element for storing different NFC application elements for use in providing the NFC services. The secure element may be a dedicated module or chipset that is part of the mobile phone or may be a removable component, such as the UMTS Integrated Circuit Card (UICC) also known as the SIM card or USIM card or a removable memory card.

When for example the mobile phone is in the card emulation mode and acts like a contactless card, a contactless reader can select the contactless NFC application elements stored in the secure element of the mobile phone and exchange Application Protocol Data Unit (APDU) commands with the NFC application elements so as to proceed with contactless transactions (as defined by the ISO14443-4 standard).

As discussed above, different types of NFC services may be available and thus, different types of NFC application elements associated with the different types of NFC services, such as payment, transport, ticketing, or loyalty NFC elements, may be stored in the secure element. There can also be different NFC application elements of the same type at the same time stored in the secure element. For example, there may be several payment type contactless NFC application elements stored in the secure element, such as PayPass^{™} NFC application element from MasterCard^{®}, Visa Smart Debit Credit^{™} (VSDC) NFC application element from Visa^{®} or ExpressPay^{™} NFC application element from American Express^{®}. Current payment application elements, such as the examples given above from Mastercard^{®}, Visa^{®} and American express^{®}, are typically stand alone applications which usually run in their own secure environment (which is generally a global platform or JavaCard based) and are protected by a firewall of the runtime environment in the secure element (as defined, for example, by the JavaCard runtime environment or the global platform specification). This is because these payment application elements typically correspond to the reference contactless application elements developed and already deployed for contactless smartcards, where only one single contactless application element runs on a contactless smartcard and thus, they have not been designed to coexist or interface with other application elements.

Having a plurality of stand alone NFC application elements, particularly when there are several NFC application elements of the same type, for use in a mobile phone can raise a number of issues due to the fact that each NFC application element operates in isolation of the other elements. Such issues include, for example, difficulties for a user to manage such stand alone NFC application elements. For example, with stand alone application elements, when a user wishes to change dynamically the available NFC services which will involve changing the NFC application elements stored in the secure element, the user has to view and select each NFC application element separately. These issues are likely to increase as the number of available NFC services increase, and the number of application element providers increase.

Another issue is that the legacy contactless applications have not been designed to be downloaded in a mobile phone with wireless and Over-The-Air (OTA) capabilities. Usually, these applications come with the contactless plastic card and are downloaded and personalized in the factory or in an authorised centre. This is the case for the contactless payment applications that are already deployed by Mastercard, Visa and American Express for instance. This means that to load and/or personalise these legacy contactless applications, a user must visit an authorised centre.

In order to take account of specific issues that arise when providing NFC services in a mobile phone, an approach would be to modify the reference contactless application elements for NFC applications to allow, for example, interoperability or interfacing with other elements or OTA provisioning. However, this would require for the application element providers to modify their reference application elements to support these services on NFC devices which will involve extra cost, new code baseline, new deployment and new certification processes.

US patent application publication no. US 2008/0191892 describes a mobile device which uses a NFC subsystem to trigger entry into a user-inactive mode. A NFC communication module allows a microprocessor to control the NFC subsystem.

European patent application publication no. EP1798867 describes a communications device having a NFC communicator and at least one secure element to provide secure data storage of transaction data representing or relating to a transaction. In one arrangement, a device has a number of secure elements each of which may have a different operating system and different applications platforms. The user selects a secure element via a user interface (generally a menu on a display) of the device. Where a secure element has a large number of applications platforms, the user may be given a menu option to select an application platform. The applications platform may be downloaded via the telecommunications network or via near field RF communication.

PCT application publication no. WO 2007/012909 describes a NFC communication device that supports two or more data formats, obtains context information (e.g. location information, types of available NFC devices and their data formats, used frequencies within range) and selects the operation mode based on the context information to optimise power consumption.

PCT application publication no. WO 2008/071924 describes a communication device having a near field RF communicator and at least one secure element separate from the near field RF communicator to provide secure data storage for transaction data representing or relating to a transaction. The device is configured to provide via a user interface a user with the capability to view data and/or applications stored on the secure element. The device may be configured, through its interface with the secure element, to enable the user to select secure element or contents within the secure element from a menu service provided by the user interface for display in a user friendly format.

European patent application EP1814239 describes a communication device for performing NFC. The device stores electronic money and performs update or the like of the electronic money stored when performing an electronic payment.

PCT application publication no. WO 2006/095212 describes a mobile terminal device comprising a smartcard module and a near field communication module. The smartcard module may include a number of different applications (e.g. loyalty card, transportation tickets, different credit cards). Each digital card is then separated from each other e.g. by number, valid date, name and issuer or service provider name.

### Brief Description of the Drawings

A wireless communication device for providing at least one Near Field Communication service to a user and a method for updating at least one Near Field Communication service to be provided by a wireless communication device, in accordance with the disclosure will now be described, by way of example only, with reference to the accompanying drawings in which:
FIG. 1 is a block schematic diagram of a communication system arrangement in accordance with an embodiment of the disclosure;
FIG. 2 is a block schematic diagram of a wireless communication device in accordance with an embodiment of the disclosure;
FIG. 3 is a schematic representation of example NFC application elements held in the NFC unit of FIG. 2 and example user interface elements of FIG. 2 in accordance with an embodiment of the disclosure;
FIG. 4 is a block schematic diagram of an example UICC card implementation of the NFC unit of the wireless communication device of FIG. 2; and
FIG. 5 is a flow diagram of a method for updating at least one Near Field Communication service to be provided by a wireless communication device in accordance with an embodiment of the disclosure.

### Detailed Description of the Drawings

In the following description, examples of embodiments of the disclosure will be described with respect to a mobile device operating within one or more wireless communication networks, such as a 2nd generation cellular communication system known as the Global System for Mobile communication (GSM) with General Packet Radio System (GPRS) capability, a 3rd generation cellular communication system such as an Universal Mobile Telecommunication system (UMTS), or Long Term Evolution (LTE) communication system. It will however be appreciated the present disclosure can be used in other types of wireless communication devices and networks, such as a subscriber unit, wireless user equipment, a portable telephone, a wireless video or multimedia device, a communication terminal, a personal digital assistant (PDA), a laptop computer, or any electronic device having wireless capability, such as a digital camera which can transfer pictures wirelessly. The term wireless communication device for providing at least one NFC service is thus intended to cover all electronic devices which have wireless capability to provide NFC services to a user.

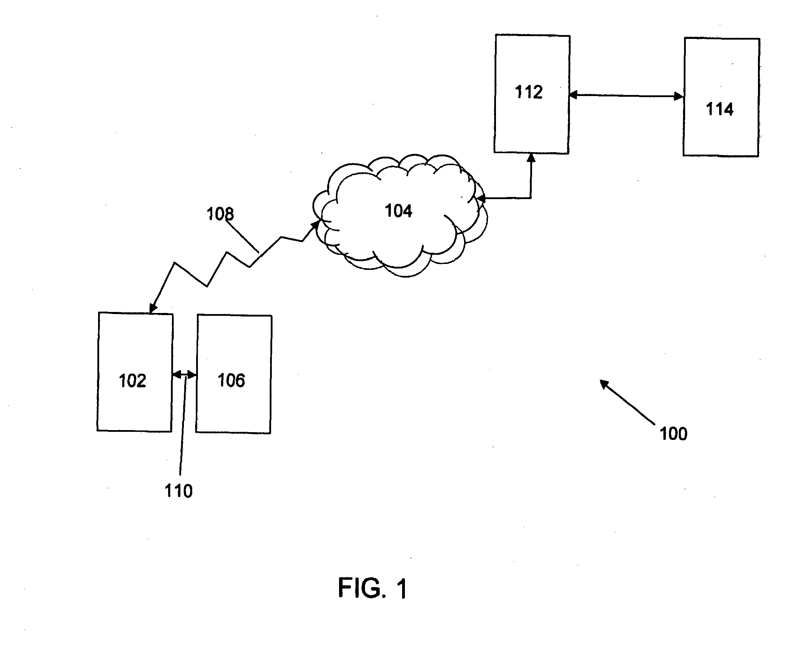

Referring firstly to FIG. 1, a communication system arrangement 100 comprises a mobile device 102 having NFC capability (that is, having wireless capability to provide NFC services to a user) and being capable of operating with a communication system 104 such as a GSM communication system. In the following, the communication system will be described as a GSM communication system but it will be appreciated that the disclosure may apply to any communication system and it is not intended to limit the disclosure to a GSM communication system. As is well known, the GSM communication system 104 provides a plurality of coverage areas or cells (not shown) served by base stations (not shown) with which the mobile device 102 can operate or communicate via radio communication links (such as link 108 shown in FIG. 1). Device 106 also has NFC capability and may be another mobile device capable of operating with the GSM communication system 104 or with another wireless communication system (not shown) or may be a fixed device such as a NFC tag or may be a reader device such as a contactless card reader (fixed or mobile). When the mobile device 102 and device 106 are close enough, for example within a couple of centimetres, a NFC communication link 110 can be established and data can be exchanged between the devices 102, 106.

In an example, the device 106 may be a contactless card reader which may be connected to a backend system (not shown) and the mobile device 102 can support a card emulation mode. A NFC communication link 110 is established between the mobile device 102 and the card reader device 106 to exchange data so that the mobile device 102 may enter a card emulation mode in which it acts as a contactless card and contactless transactions may then be performed.

In another example, the mobile device 102 and the device 106 may be devices having Bluetooth communication capability. A NFC communication link 110 is established between the mobile device 102 and the device 106 to exchange data so as to enable a Bluetooth communication link to be established between the devices for subsequent communications.

The mobile device 102 may act as a reader/writer or a tag.

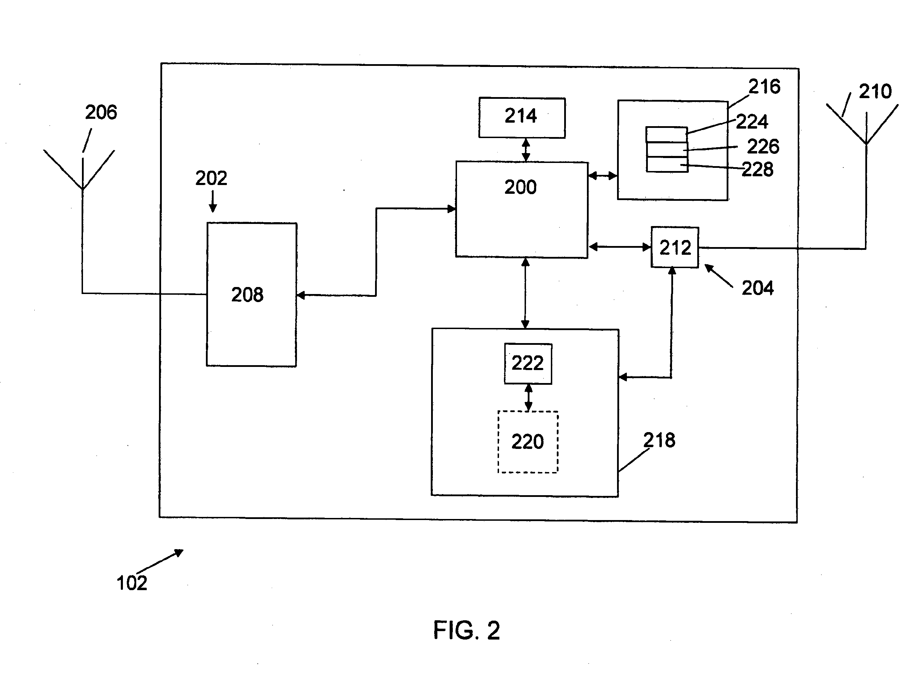

FIG. 2 is a block diagram of a wireless communication device, such as the mobile device 102 shown in FIG. 1, in accordance with an embodiment of the disclosure. As will be apparent to a skilled person, FIG. 2 shows only the main functional components of an exemplary mobile device 102 that are necessary for an understanding of the invention.

The mobile device 102 comprises a processing unit 200 for carrying out operational processing for the mobile device 102. The mobile device 102 also has a RF communication section 202 for providing wireless communication via a radio communication link 108 with the GSM communication system 104 and a NFC communication section 204 for providing NFC services via a NFC communication link 110. The mobile device may, for example, establish a NFC communication link with a reader having NFC capability via the NFC communication section 204 when the mobile device 102 is within a couple of centimetres of the reader. The RF communication section 202 typically includes, for example, an antenna 206, transmit and receive paths 208 including a modulation/demodulation section (not shown), and a coding/decoding section (not shown), as will be known to a skilled person and thus will not be described further herein. The NFC communication section 204 typically includes, for example, a NFC antenna 210 and a modulation/demodulation section 212, as will be known to a skilled person and thus will not be described further herein. The communication sections 202, 204 are coupled to the processing unit 200.

The mobile device 102 also has a Man Machine Interface MMI 214, including elements such as a key pad, microphone, speaker, display screen, for providing an interface between the mobile device 102 and a user of the device. The MMI 214 is also coupled to the processing unit 200.

The processing unit 200 may be a single processor or may comprise two or more processors carrying out the processing required for the operation of the mobile device 102. The number of processors and the allocation of processing functions to the processing unit is a matter of design choice for a skilled person. The mobile device 102 also has a program memory 216 in which is stored programs containing processor instructions for operation of the mobile device 102. The programs may contain a number of different program elements or sub-routines containing processor instructions for a variety of different tasks, for example, for: communicating with the user via the MMI 214; and processing signalling messages (e.g. paging signals) received from the communication system 104.

The mobile device 102 further comprises a NFC unit 218 which can act as a secure element to store at least one NFC application element for use in providing at least one NFC service. The NFC unit 218 may store only one NFC application element but typically, the NFC unit 218 will store a plurality of NFC application elements associated with a plurality of NFC services, with some of the services being of the same type. For example, the NFC unit 218 may store several contactless payment application elements from different service providers such as MasterCard^{®}, Visa^{®}, and American Express^{®}. The NFC unit 218 is coupled to the processing unit 200 and may comprise a removable module or a module incorporated into the mobile device 102. The NFC unit 218 may also be coupled to the NFC communication section 204. Whether the module is removable or incorporated into the mobile device 102, the module may be a dedicated module whose sole function is for providing NFC services or may be a module that has other functions additional to providing NFC services.

When the NFC unit 218 includes a removable module (represented by the dotted box 220 in FIG. 2), an interface 222 is coupled to the processing unit 200 for interfacing between the removable module 220 and the processing unit 200. The removable module 220 may be a Subscriber Identity Module (SIM) card or a Universal Integrated Circuit Card (UICC) which, in addition to storing network specific information used to authenticate and identify the subscriber on the GSM communication system 104 (and/or other systems) to control access, also stores the NFC application elements. In this case, the interface 222 is a SIM or UICC interface. The UICC card is the name of the standardised platform that can run several telecom applications such as the USIM application for a 3G network, or the SIM application for a 2G network, or others. The UICC card was introduced with the release 99 of the 3GPP standards, and replaces the SIM platform (that has GSM capabilities only). The term UICC card will be used for the rest of the document to designate the Integrated Circuit Card (ICC) used in a mobile phone for the support of the telecom applications such as USIM, SIM, and ISIM.

Communication between the NFC unit 218 and the processing unit 200 may occur via a direct connection through a serial link, such as an ISO link between the UICC interface 222 and the processing unit 200, or via the NFC modulator/demodulator 212 that acts as a proxy.

When NFC unit 218 is a dedicated module that is incorporated into the mobile device 102, the module may be soldered on the main Printed Circuit Board (PCB) of the mobile device 102 or may be a removable module such as a memory card and will act as a dedicated secure memory coupled to the processing unit 200, for example via a ISO link or any other suitable connection (such as USB, I²C). The dedicated module may comprise, for example, an Integrated Circuit (IC) which is substantially the same as the IC used for contactless smartcard devices.

The NFC unit 218 may alternatively be a element in the mobile device 102 which emulates a UICC card or a memory card. For example, the NFC unit 218 may be an NFC unit element (not shown) which is part of the program memory 216.

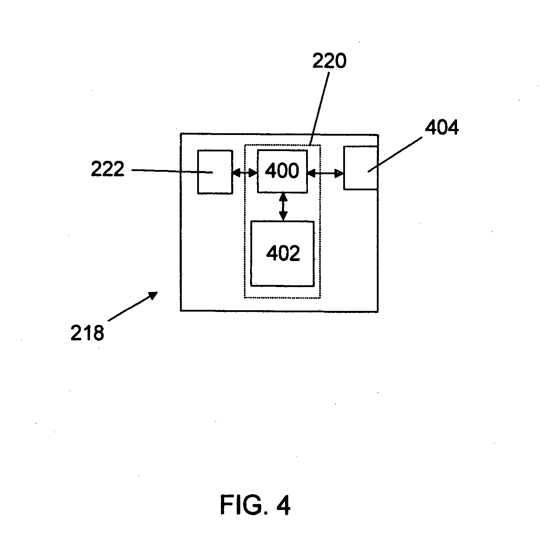

FIG. 4 shows a simplified schematic diagram of an example of a UICC implementation of a NFC unit 218 in accordance with an embodiment of the disclosure. The UICC NFC unit 218 comprises the UICC interface 222 for coupling to the processing unit 200, the UICC card 220 when coupled to the mobile device 102 and an interface 404 for coupling to the NFC modulator/demodulator or modem 212. In an example, interface 404 is a Host Controller Interface (HCI) interface which controls the communication of data according to a protocol standardised by ETSI (ETSI 102 622). The UICC card 220 typically comprises a processor 400 and memory 402.

In the example shown in FIG. 2, the program memory 216 stores specific program elements for controlling the operation of the mobile device 102 by means of the processing unit 200 which include a user interface element 224, a receiving element 226 and a user interface update element 228. The user interface element 224 is for managing the NFC application elements stored in the NFC unit 218 so as to provide the NFC services associated with the application elements and for providing information relating to the NFC services associated with the stored NFC application elements to the user. The receiving element 226 is for receiving update information for a NFC service and for transferring the received update information to the NFC unit 218 to update the NFC unit 218. The user interface update element 228 is for updating the information provided to the user by the user interface element according to the received update information transferred to the NFC unit 218. Although shown in FIG. 2 as separate elements, the user interface element 226 and the user interface update element 228 may be part of the same element.

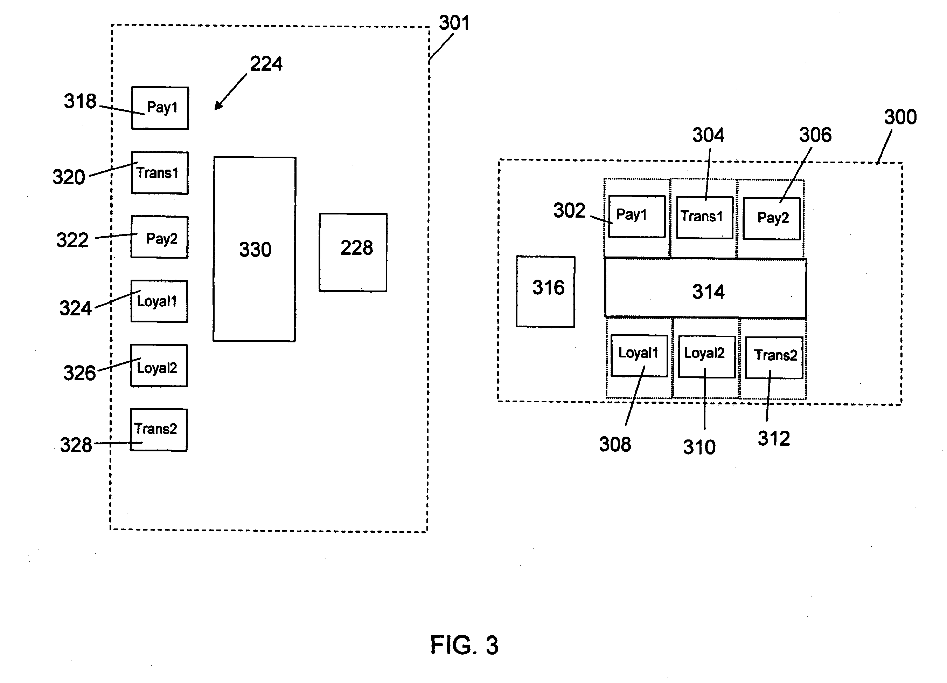

Referring now to FIG. 3 which illustrates schematically and in more detail the arrangement of the NFC application elements held in the NFC unit 218 and the elements 224, and 228 in accordance with an example of the disclosure.

Block 300 represents the secure operating environment of the NFC unit 218 and block 301 represents the operating environment of the main processor 200 and program memory 216. Block 300 shows a plurality of NFC application elements 302-312, and an operating system 314 of the NFC unit 218. In a UICC implementation, the NFC application elements 302-312 are stored in the memory 402 (shown in FIG. 4) and called by the processor 400. The operating system 314 may be stored in the memory 402 or memory that is part of the processor 400 or a separate memory. The dotted boxes around the NFC application elements 302-312 represent that the NFC application elements 302-312 are stand alone applications operating in isolation from other application elements. For instance, the operating system 314 may be based on the JavaCard specifications and may also implement the global platform standards that both define the process of isolation of the applications. It will however be appreciated that some or all of the NFC application elements stored in the NFC unit 218 may be designed to have some interoperability. For illustration purposes, the NFC application element 302 is associated with a first payment service (e.g. PayPass^{™} from MasterCard^{®}), the NFC application element 304 is associated with a first transport service (e.g. train ticket), the NFC application element 306 is associated with a second payment service (e.g. VSDC^{™} from Visa^{®}), the NFC application element 308 is associated with a first loyalty card (e.g. card to collect points for a particular book shop), the NFC application element 310 is associated with a second loyalty card (e.g. card to collect points for a particular airline), and the NFC application element 312 is associated with a second transport service (e.g. airline ticket). It is noted that an NFC service may have more than one NFC application element associated with it. For example, the NFC payment service from Mastercard^{®} comprises two application elements: one is a Proximity Payment System Environment (PPSE) and the second one is the PayPass^{™} application. The PPSE application is used to retrieve the reference of the PayPass^{™} applications if several have been installed.

In order to manage the NFC application elements stored in the NFC unit 218 to provide the NFC services associated with the application elements, the user interface element 224 includes a plurality of mobile application elements 318-328, with each one of the mobile application elements 318-328 managing at least one of the NFC application elements 302-312 to provide the associated service. Mobile application element 318 manages the first payment NFC application element 302, mobile application element 320 manages the first transport NFC application element 304, mobile application element 322 manages the second payment NFC application element 306, mobile application element 324 manages the first loyalty NFC application element 308, mobile application element 326 manages the second loyalty NFC application element 310, and mobile application element 328 manages the second transport NFC application element 312. In some cases, a mobile application element may manage more than one NFC application element. For example, a mobile application element may manage two or more NFC application elements which are associated with the same service provider and/or the same NFC service.

The user interface element 224 also includes a user interface 330 for providing information relating to the NFC services provided by the NFC application elements 302-312 to a user via the MMI 214. The information presented to the user may include a list of the NFC services which may be provided by the NFC application elements 302-312. Using the examples given above for the NFC application elements 302-312, the list may include PayPass^{™} payment card, VSDC^{™} payment card, train ticket, airline ticket, book shop loyalty card, airline loyalty card. The user interface element 224 therefore enables the user to select one of the NFC services or NFC application elements 302-312 from information provided to the user via the MMI 214 and once selected, the user interface element 224 manages the selected NFC application element via the respective mobile application element to provide the selected service. Managing the selected NFC application by the user interface element 224 includes selecting and executing the mobile application element which corresponds to the selected NFC application element and the selected mobile application element then controls the respective NFC application element and its behaviour during the provision of the associated service.

The information provided to the user by the user interface element 224 which relates to the NFC services associated with the NFC application elements 302-312 stored in the NFC unit 218 (e.g. information which describes the available NFC services) may be provided to the user interface element 224 when the NFC application elements are stored in the NFC unit 218, for example when the NFC application elements are loaded and installed or personalised in the NFC unit 218.

In an example, the user interface element 224 may group the NFC services according to the type of available NFC service. For example, the user may be presented with a list of the available payment cards, a list of the available loyalty cards and/or a list of the available transport tickets. The information provided to the user may be in the form of graphical representations or other identifier for each of the NFC services e.g. a logo or brand image or jingle or animation etc. for each NFC service. The user interface element 224 may in addition provide some options to the user(e.g. via menus on the display of the mobile device 102) such as managing a lock code for a particular NFC application element or selecting payment card options such as the default card to be used during a contactless transaction. The lock code is known as the Contactless Application Lock Code (CALC) and if used, may be provided to the NFC unit 218 when the NFC application element is stored in the NFC unit 218. Managing the CALC may include verifying, changing, or activating/deactivating the CALC.

The user interface element 224 can be a native application such as a proprietary application or a Java based application.

In an example shown in FIG. 3, a database element 316 is stored in the NFC unit 218 for storing summary information for the NFC application elements 302-312 stored in the NFC unit 218. In an example, the database element may be an NFC application element. The summary information may include at least one parameter of each of the NFC application elements 302-312 such as a graphical representation (e.g. a logo, animation or other brand image) or other identifier of the NFC service associated with the NFC application element (such as a jingle or the Application Identifier (AID)). The summary information may also or instead include personalised information or parameters for one or more NFC application elements in accordance with details of the user. For example, in the case of a payment application element, the personalised information may include the personal account number, cryptographic keys, or CALC. The summary information may also or instead include a list of the NFC services associated with the NFC application elements 302-312 stored in the NFC unit 218, a list of the NFC application elements 302-312 and/or a list of the available NFC services grouped according to the type of NFC service. For example, the summary information may include a list of the different NFC services such as payment, transport, ticketing or others the NFC unit 218 offers, and/or a list of the available payment cards, a list of the available loyalty cards and/or a list of the available transport tickets.

The information provided to the user by the user interface element 224 may be obtained from the summary information stored in the database element 316. In an example, the user interface element 224 interfaces with the database element 316 through APDU commands which are defined according to the format defined in ISO 14443-4 or ISO 7816-4.

The database element 316 is a stand alone application that does not interface or share data with other NFC application elements stored in the NFC unit 218. The summary information may be provided to the database element 316 (as with the user interface element 224) when the NFC application elements are stored in the NFC unit 218, for example when the NFC application elements are loaded and installed or personalised in the NFC unit 218.

The database element 316 may interface with the user interface element 224 to provide at least some or all of the following services and APDU commands:
Commands to set/get the Application Identifier (AID) of the different NFC application elements 302-312 stored in the NFC unit 218. AID is the standardised way to identify applications in a smart card according to the ISO 7816 and Global Platform standards. The AID may be listed per service, use case or activity, such as payment, transport, ticketing, loyalty, etc. The set/get commands can, for example, retrieve the list of the different NFC application elements for payment;
Command to set/get the default AID of a NFC application element when further NFC application elements are related to the same use case or activity such as in the case where there are multi-card payment application elements; and
Commands to manage a pool of Contactless Application Lock Codes (CALC) or similar security codes for the NFC application elements. These commands allow verifying / changing / activating / deactivating / unblocking the security codes.

Some payment application elements do not support the CALC feature by default. For these elements, in order that the user interface element 224 running in the mobile device can offer the user a security code or CALC service, the database element 316 can be used to offer the user interface element 224 the possibility to support the CALC/security code feature on behalf of the payment application elements without having to modify the payment application element. Thus, the user interface element 224 is responsible for the implementation of the CALC user interface and for the CALC APDU command exchange with the database element 316.

As mobile phones accumulate new applications and become more advanced, Over-The-Air configuration has been used increasingly for distribution of new software updates to mobile phones or provisioning mobile phones with the necessary settings with which to access new services such as WAP or MMS. The updates may include software updates from phone manufacturers or network operators or other third parties to software held in the mobile phone. Typically, mobile phones are updated OTA via data packets sent to the RF sections of the mobile phones from OTA servers which messages can provide remote control of mobile phones for service and subscription activation, personalisation and programming of a new service for mobile network operators and telecom third parties.

In an example of an embodiment of the disclosure, the updates may also include update information for one or more of the NFC services associated with the NFC application elements 302-312 stored in the NFC unit 218. The update information may include instructions to add a new NFC application element to the NFC unit 218, instructions to update one or more parameters of a NFC application element stored in the NFC unit 218 and/or instructions to remove one or more NFC application elements stored in the NFC unit 218. The instructions to update one or more parameters may include personalisation information to update one or more parameters of a NFC application element in accordance with details of the user. For example, in the case of a payment application element, the personalisation information may include information to set the personal account number, cryptographic keys, CALC or branding information for the end user. In the case of a payment card application element, the instructions to update one or more parameters may include instructions sent by the issuing bank to update the payment card expiration date, to change a security code, to set the credit card number, to set the security checks to be performed by the backend system during a payment transaction, to set the maximum amount for a payment transaction etc.. The update information may additionally or alternatively include data or transaction information for the NFC service, such as payment details.

The parameters, including the personalisation information, may be stored in the memory 402 of the NFC unit 218 or a separate memory (not shown) of the NFC unit 218 or for example in the case of branding information may be stored in the mobile device 102. By storing the parameters in the NFC unit 218, when the NFC unit 218 is a removable module, the different NFC services and NFC application elements, as well as certain parameters (such as branding information, CALC information, default NFC application element, etc), are stored on the removable NFC unit 218 and are available to the user even when the NFC unit 218 is removed from one mobile device and inserted into another mobile device having NFC capability.

In the arrangement 100 shown in FIG. 1, an OTA server 112 provides updates to the mobile device 102 via the GSM communication system 104. Although one OTA server 112 is shown, there may be more than one OTA server with each OTA server providing different updates. In an example in accordance with an embodiment of the disclosure, the update information provided by the OTA server 112 include updates to NFC application elements held in the mobile device 102. The OTA server 112 may be part of the GSM network operator or may be separate.

In the case of updates to a NFC service, in the example shown in FIG. 1 update information for a NFC service are held by a NFC service provider server 114 and sent to the OTA server 112 for transmission to the mobile device 102. Only one NFC service provider server 114 is shown in FIG. 1. It will however be appreciated that there may be more than one NFC service provider server 114 associated with the same or different service provider. The NFC service provider servers may be controlled and managed directly by the service provider e.g. a bank or airline, or by a third party managing the NFC service updates for a service provider. Although not shown in the example shown in FIG. 1, the update information for the NFC application elements may be sent by the OTA server 112 under the control of a Certification Authority (not shown) in order to enhance the security of the update process. The Certification Authority (not shown) manages the security of the data exchange through mutual authentication or data ciphering and signing based on cryptographic keys the servers share with the NFC unit 218. The Certification Authority may be part of the OTA server or separate. The OTA server 114 is thus able to load, install, update and personalise NFC application elements in the NFC unit 218.

The update may be triggered by the user or the OTA server.

The update information sent from the OTA server 112 is received at the RF communication section 202 of the mobile device 102 and at the processing unit 200 and transferred to the NFC unit 218 to update the NFC unit 218 under the control of the receiving element 226 of the program memory 216. The OTA server 112 can thus dynamically update and manage the content of the NFC unit 218 OTA. It can remove, add or update the NFC application elements 302-312 or their parameters in the NFC unit 218.

If the mobile application elements 318-328 associated with the new or updated NFC application elements are already stored on the mobile device 102, the mobile application elements may receive a notification telling them their parameters have been updated or new applications have been installed as is described in more detail below. After receiving the notification, the mobile application element fetches the update from the NFC unit 218. If the mobile application element is not stored on the mobile device 102, or is not able to handle the new loaded and installed NFC application elements in the secure element, an update of this mobile application element can also be done OTA.

Since the user interface element 224 provides to the user information relating to the available NFC services, the user interface element 224 needs to be notified accordingly to take these changes into account so that it can update the information displayed to the user to provide the user an updated list of the available NFC services and NFC application elements that are present in the NFC unit 218 after an OTA update. The default NFC application element, the branding information, the CALC information may have changed too. Thus, the program memory 216 further includes the user interface update element 228 for updating the information provided to the user by the user interface element 224 according to the received update information transferred to the NFC unit 218. The user interface update element 228 receives an update notification (e.g. during or after a OTA update session) indicating that update information has been received and in response to that notification, the user interface update element 228 can update the information provided to the user. For example, the user interface update element 228 initiates a synchronisation process with the NFC unit 218.

In an example, a syncML DM protocol, which is a Device Management (DM) protocol using XML for data exchange defined by the Open Mobile Alliance (OMA), is used to connect the mobile device 102 to the OTA server 112. The receiving element 226 in this example therefore comprises an OMA DM engine (not shown) and an OMA DM NFC plug-in module (not shown) connected to the OMA DM engine to run in the processing unit 200 to control the data exchange between the mobile device 102 and the OTA server 112. The receiving element 226 is not part of the user interface element 224 and runs in a different process and so is independent from the user interface element 224. The receiving element 226 determines that the received data from the OTA server 112 is NFC update information (e.g. from the format) and transfers the received update information, which comprises data packets, to the NFC unit 218, for example via a ISO link. Before transferring the received update information to the NFC unit 218, the receiving element 226 may process the received update information and translate them into APDU commands. The processor 400 of the NFC unit 218 then processes the received data packets updates the NFC unit 218 according to the received update information. The NFC unit 218 can update the content of the database element 316 and/or the NFC application elements 302-312 based on the received update information received from the receiving element 226. In the case of modifications to the NFC application elements 302-312 which should be reflected in the user interface in the mobile application elements 318-328, the content of the database element 316 is also updated. Thus, the database element 316 is updated during OTA sessions to reflect the changes in the NFC unit 218 that have an impact on the user interface. The response from the NFC unit 218 is sent back to the OTA server 112 through the OMA DM NFC plug-in module and OMA DM engine.

The OMA DM NFC plug-in module has the capability to send events to the user interface update element 228 to indicate that update information has been received when for example one of the following conditions is fulfilled:
Start of an OTA session;
End of an OTA session; and
The reception of a data packet that requests that one of the mobile application elements 318-328 is notified.

These events sent from the OMA DM NFC plug-in module may contain additional information data to inform the user interface update element 228 and the mobile application elements 318-328 of the progress of the OTA session in the NFC unit 218.

Once the user interface update element 228 receives a notification of an event from the OMA DM NFC plug-in module, the user interface update element 228 can then request the received update information from the NFC unit 218. In a NFC unit 218 having a database element 316, the user interface update element 228 sends a request to the database element 316 to receive the received update information that was updated during the OTA session by the receiving element 226 (e.g. the OMA DM NFC plug-in module). The user interface update element 228 on receipt of the received update information from the database element 316 in the NFC unit 218 in response to its request, can then update the information provided to the user by the user interface element 224.

Alternatively, the user interface element 224 may be updated when update information is received OTA by arranging for the NFC application elements 302-312 running in the NFC unit 218 to send an update notification to the user interface element 224 in case of an OTA update. In an example, an update notification may be generated based on monitoring a state change in the state machine of the NFC application element. If the NFC unit 218 includes a UICC card 220, the update notification may be sent to the user interface update element 228 by the UICC card through a STK event (SIM toolkit event) over the ISO link that connects the UICC card to the processing unit 200 or an HCI event (Host Controller Interface event) over a Single Wire Protocol (SWP) link that connects the HCI interface 404 of the UICC card 220 to the NFC modulator/demodulator 212.

In the case of sending an update notification via a SIM toolkit event, on receipt of the SIM toolkit event, the user interface update element 228 can then request the received update information from the NFC unit 218. In a NFC unit 218 having a database element 316, the processor 400 retrieves the database element 316 with the received update information and the user interface update element 228 receives the received update information from the database element 316. The user interface update element 228 on receipt of the received update information from the NFC unit 218 in response to its request, can then update the information provided to the user by the user interface element 224.

In the case of the UICC card 220 sending a HCI event to the NFC modulator/demodulator 212, the NFC modulator/demodulator 212 sends the HCI event to the processing unit 200 via a link, such as a I²C, UART, USB link, and on receipt of the HCI event, the user interface update element 228 can then request the received update information from the NFC unit 218. The user interface update element 228 on receipt of the received update information from the NFC unit 218 in response to its request, can then update the information provided to the user by the user interface element 224. In a NFC unit 218 having a database element 316, the processor 400 retrieves the database element 316 with the received update information and the user interface update element 228 receives the received update information from the database element 316.

It is also possible that in the case when the user interface update element 228 and the user interface element 224 are part of the same application, the combined application can manage the provisioning or updating of the NFC application elements OTA itself. In this case, the combined application 224, 228 is directly connected to the receiving element 226 and hence the OTA server 112 and can be responsible for forwarding the updated information received to the NFC unit 218 and to send back the response from the NFC unit 218 to the OTA server 112. In order to trigger the synchronization process of the information provided by the user interface element 224 with the NFC unit 218 following an OTA update, the user interface update element 228 of the combined application can monitor a state change in a state machine (such as start of an OTA session, end of an OTA session, etc), get an event from the NFC unit 218 as described previously (e.g. STK or HCI event) or monitor the reception of a data packet received OTA that asks for synchronization.

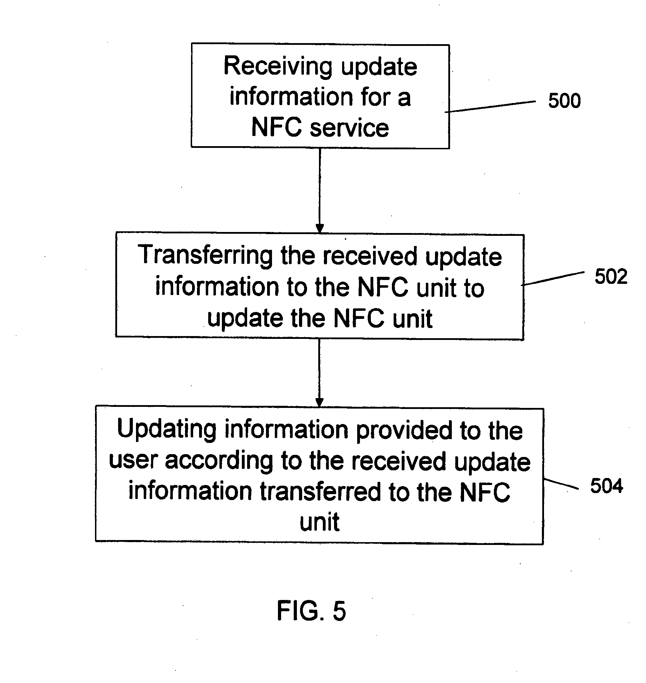

The following example illustrates a method for updating at least one NFC service in a mobile device 102 in accordance with the disclosure. In the following reference is also made to FIG. 5.

In this example, the user interface element 224 manages a set of three contactless payment application elements that are stored in the NFC unit 218 that includes, in this example, a UICC card 220. A database element 316 is present in the UICC card 220. This database element 316 can be dynamically loaded/installed/personalized. The user interface element 224 manages one CALC/security code per contactless payment application element in the UICC card 220. These payment application elements do not support the CALC/security code feature by default. The database element 316 is used to manage the security code/CALC feature on behalf of the payment application elements.

The user interface element 224 runs in the mobile device 102 and offers a User Interface UI to the user so as to manage and pay with the payment application elements installed in the NFC unit 218. For example, in response to input by the user, the user interface element 224 exchanges APDU commands with the UICC card 220 and the database element 316 to verify a CALC, or select the default payment application element.

The OTA server 112 has the capability to update (e.g. load/install/personalize/delete) the payment application elements in the UICC card 220.

The OTA server 112 receives from the service provider server 114 the update information for the payment application elements including personalisation information for the payment application elements for the particular user, to be loaded, installed and stored in the NFC unit 218.

The OTA server 112 communicates with the mobile device 102 over the RF communication link 108. For example, the user may receive at the RF receiving section 202 a notification message, such as a binary SMS as per the OMA-DM specification, that informs the user that the content of the NFC unit 218 is to be updated. The binary SMS is targeted to launch the OTA client on the phone (OMA DM NFC plug-in module in this case) which then connects to the OTA server 112. Alternatively, a OTA session update can be triggered by the user who can start it manually, for example, through the browser by reaching a specific URL (for example, a URL that has been bootstrapped by a OMA-DM server), by calling a specific phone number, by reading an NFC tag that contains the connection information, or by other suitable ways.

The OMA DM NFC plug-in module, which is part of the receiving element 226, once launched receives update information for the payment application elements (step 500 in FIG. 5) from the OTA server 112 and transfers the received update information to the NFC unit 218 to update the NFC unit 218 (step 502). For example, data is conveyed through APDU commands over an ISO 7816-4 link that connects the processing unit 200 to the NFC unit 218. The OMA DM NFC plug-in module guides the user through the OTA update process and the user is informed of the progress of the update of the NFC unit 218.

The information provided to the user by the user interface element 224 is then updated (step 504) according to the received update information transferred to the NFC unit 218. For example, the user interface update element 228 is notified by the OMA DM NFC plug-in module through an update notification or event that the content of the NFC unit 218 has been updated. The user interface update element 228 catches this event and opens a connection link with the database element 316 in the NFC unit 218. The user interface update element 228 sends APDU commands to the database element 316 to retrieve the list of payment cards that are now present in the NFC unit 218. The user interface update element 228 takes this new card list into account, retrieves their properties and updates the information to be provided to the user accordingly. The user may get a pop-up notification informing that the content of the NFC unit 218 has changed with the list of the new payment cards available.

The present disclosure thus enables NFC services to be provided by a wireless communication device to be updated OTA and for the information relating to the NFC services to be provided to a user to be updated accordingly.

Having the user interface element 224 that collects information of all the NFC application elements and their properties and provides the information to the user, and a user interface update element which updates the user information when there is an update, the present disclosure can therefore be implemented easily with legacy application elements that were originally designed for a single contactless smartcard and are stand alone applications.

It is also noted that the legacy application elements, such as the contactless application elements developed for a single card platform, do not offer a user interface which may, for example display the name of the card, the default card to be used in a contactless transaction, or a card logo, and that can be managed OTA.

In devices having the database element, the database element can support the dynamic storage of summary information for the NFC application elements stored in the NFC unit, such as a list of the NFC services, a list of the application elements and their properties which summary information can be dynamically updated when the NFC services are updated OTA.

In the foregoing description, the invention has been described with reference to specific examples of embodiments of the invention. It will, however, be evident that various modifications and changes may be made therein without departing from the broader scope of the invention as set forth in the appended claims.

## Claims

1. A wireless communication device (102) for providing at least one Near Field Communication service to a user, the wireless communication device (102) comprising:
a Near Field Communication unit (218) for storing a plurality of application elements (302-312) for use in providing a plurality of Near Field Communication services, and for storing a database element (316) for storing summary information for the plurality of application elements (302-312);
a user interface element (224) for managing the plurality of application elements stored in the Near Field Communication unit (218) to provide the Near Field Communication services and for providing information relating to the Near Field Communication services to the user based on information obtained from the summary information;
a receiving element(226) for receiving update information for a Near Field Communication service and for transferring the received update information to the Near Field Communication unit (218) to update the Near Field Communication unit (218) and to update the summary information stored in the database element (316) for the Near Field Communication service, wherein the received update information includes at least one of: instructions to add a new application element, instructions to update one or more parameters of at least one application element stored in the Near Field Communication unit (218) and instructions to remove an application element (302-312) stored in the Near Field Communication unit (218); and
a user interface update element (228) for receiving updated summary information from the database element (316) and for updating the information provided to the user by the user interface element (224) according to the received updated summary information received from the database element (316).

2. The wireless communication device according to claim 1 wherein the summary information includes at least one of:
a list of the plurality of Near Field Communication services associated with the stored plurality of application elements (302-312);
a list of different types of Near Field communication services provided by the plurality of Near Field Communication services; and
at least one parameter of each of the plurality of application elements (302-312), the at least one parameter of an application element including one of the following: a graphical representation of the application element, an identifier of the application element, and a lock code for the application element.

3. The wireless communication device according to claim 1 or 2, wherein the instructions to update one or more parameters includes personalisation information to update one or more parameters in accordance with user details.

4. The wireless communication device according to any preceding claim, wherein the receiving element (226) is arranged to receive update information from an Over The Air server (112).

5. The wireless communication device according to any preceding claim, wherein the user interface update element (228) is arranged to receive an update notification indicating that update information has been received.

6. The wireless communication device according to claim 5, wherein the receiving element (226) is arranged to send the update notification to the user interface update element (228) when update information has been received.

7. The wireless communication device according to claim 6, wherein the user interface update element (228) is arranged to receive the received update information from the receiving element (226) in response to receiving the update notification.

8. The wireless communication device according to claim 5, wherein the Near Field Communication unit (218) is arranged to send the update notification to the user interface update element (228).

9. The wireless communication device according to claim 8, wherein the Near Field Communication unit (218) comprises an Universal Integrated Circuit Card, hereinafter referred to as UICC, and the UICC card is arranged to provide an update notification comprising a SIM toolkit event to the user interface update element (228).

10. The wireless communication device according to claim 8, further comprising a Near Field Communication modem for communicating with a reader over a Near Field Communication link, and being coupled to the Near Field Communication unit (218) for providing communication between the user interface update element (228) and the Near Field Communication unit (218), wherein the Near Field Communication unit (218) is arranged to send the update notification to the user interface update element (228) via the Near Field Communication modem.

11. The wireless communication device according to any preceding claim, wherein the user interface update element (228) is arranged to retrieve at least the received update information from the Near Field Communication unit (218) in response to receiving an update notification indicating that update information has been received.

12. The wireless communication device according to claim 11, wherein the user interface update element (228) is arranged to retrieve at least the updated summary information from the database element (316) in response to receiving an update notification indicating that update information has been received.

13. A method of updating at least one Near Field Communication service to be provided by a wireless communication device (102), the wireless communication device (102) having a Near Field Communication unit (218) for storing a plurality of application elements (302-312) for use in providing a plurality of Near Field Communication services, and for storing a database element (316) for storing summary information for the plurality of application elements (302-312) and a user interface element (224) for managing the plurality of application elements stored in the Near Field Communication unit (218) to provide the plurality of Near Field Communication services and for providing information relating to the plurality of Near Field Communication services to the user based on information obtained from the summary information, the method comprising:
receiving at the wireless communication device (102) update information for a Near Field Communication service and for transferring the received update information to the Near Field Communication unit (218) to update the Near Field Communication unit and to update the summary information stored in the database element (316) for the Near Field Communication service, wherein the received update information includes at least one of: instructions to add a new application element, instructions to update one or more parameters of at least one application element stored in the Near Field Communication unit (218) and instructions to remove an application element (302-312) stored in the Near Field Communication unit (218); and
receiving updated summary information from the database element (316) and updating the information provided to the user by the user interface element (224) according to the received updated summary information received from the database element (316).

## Patentansprüche

1. Drahtlose Kommunikationsvorrichtung (102) zur Bereitstellung zumindest eines Nahbereichs-Kommunikationsdienstes für einen Nutzer, wobei die drahtlose Kommunikationsvorrichtung (102) Folgendes aufweist:
eine Nahbereichs-Kommunikationseinheit (218) zum Speichern einer Vielzahl von Anwendungselementen (302-312) zur Verwendung bei der Bereitstellung einer Vielzahl von Nahbereichs-Kommunikationsdiensten, und zum Speichern eines Datenbankelements (316) zur Speicherung von zusammenfassenden Informationen für die Vielzahl von Anwendungselementen (302-312);
ein Benutzeroberflächenelement (224) für die Leitung oder Verwaltung der Vielzahl von in der Nahbereichs-Kommunikationseinheit (218) gespeicherten Anwendungselementen, um die Nahbereichs-Kommunikationsdienste bereitzustellen und um die Nahbereichs-Kommunikationsdienste betreffenden Informationen für den Nutzer basierend auf Informationen, welche aus den zusammenfassenden Informationen erhalten werden, bereitzustellen ;
ein Empfangselement (226) für den Empfang von Aktualisierungsinformationen für einen Nahbereichs-Kommunikationsdienst und für den Transfer der empfangenen Aktualisierungsinformationen zu der Nahbereichs-Kommunikationseinheit (218), um die Nahbereichs-Kommunikationseinheit (218) zu aktualisieren und um die in dem Datenbankelement (316) für den Nahbereichs-Kommunikationsdienst gespeicherten zusammenfassenden Informationen zu aktualisieren, **dadurch gekennzeichnet, dass** die empfangenen Aktualisierungsinformationen zumindest eines der Folgenden einschließen: Befehle für das Hinzufügen eines neuen Anwendungselements, Befehle für das Aktualisieren eines oder mehrerer Parameter zumindest eines in der Nahbereichs-Kommunikationseinheit (218) gespeicherten Anwendungselements, sowie Befehle für das Entfernen eines in der Nahbereichs-Kommunikationseinheit (218) gespeicherten Anwendungselements (302-312); und
ein Benutzeroberflächen-Aktualisierungselement (228) für den Empfang von aktualisierten zusammenfassenden Informationen von dem Datenbankelement (316) und für die Aktualisierung der für den Nutzer von dem Benutzeroberflächenelement (224) bereitgestellten Informationen gemäß den empfangenen aktualisierten zusammenfassenden Informationen, welche von dem Datenbankelement (316) erhalten werden.

2. Drahtlose Kommunikationsvorrichtung nach Anspruch 1, **dadurch gekennzeichnet, dass** die zusammenfassenden Informationen zumindest eines der Folgenden einschließen:
eine Liste der Vielzahl von Nahbereichs-Kommunikationsdiensten, welche der gespeicherten Vielzahl von Anwendungselementen (302-312) zugehörig sind;
eine Liste unterschiedlicher Arten von Nahbereichs-Kommunikationsdiensten, welche von der Vielzahl von Nahbereichs-Kommunikationsdiensten bereitgestellt werden; und
zumindest einen Parameter von jedem der Vielzahl von Anwendungselementen (302-312), wobei der mindestens eine Parameter eines Anwendungselements eines der Folgenden einschließt: eine graphische Darstellung des Anwendungselements, eine Kennung des Anwendungselements, sowie einen Sperrcode für das Anwendungselement.

3. Drahtlose Kommunikationsvorrichtung nach Anspruch 1 oder 2, **dadurch gekennzeichnet, dass** die Befehle zur Aktualisierung eines oder mehrerer Parameter Personalisierungsinformationen aufweisen, um einen oder mehrere Parameter gemäß Benutzerdetails oder Nutzerdaten zu aktualisieren.

4. Drahtlose Kommunikationsvorrichtung nach einem der vorhergehenden Ansprüche, **dadurch gekennzeichnet, dass** das Empfangselement (226) so angeordnet ist, dass es Aktualisierungsinformationen von einem Over-The-Air-Server (112) empfängt.

5. Drahtlose Kommunikationsvorrichtung nach einem der vorhergehenden Ansprüche, **dadurch gekennzeichnet, dass** das Benutzeroberfläche-Aktualisierungselement (228) so angeordnet ist, dass es eine Aktualisierungsbenachrichtigung empfängt, welche anzeigt, dass Aktualisierungsinformationen empfangen worden sind.

6. Drahtlose Kommunikationsvorrichtung nach Anspruch 5, **dadurch gekennzeichnet, dass** das Empfangselement (226) so angeordnet ist, dass es die Aktualisierungsbenachrichtung an das Benutzeroberflächen-Aktualisierungselement (228) sendet, sobald Aktualisierungsinformationen empfangen worden sind.

7. Drahtlose Kommunikationsvorrichtung nach Anspruch 6, **dadurch gekennzeichnet, dass** das Benutzeroberflächen-Aktualisierungselement (228) so angeordnet ist, dass es die empfangenen Aktualisierungsinformationen von dem Empfangselement (226) ansprechend auf den Empfang der Aktualisierungsbenachrichtigung empfängt.

8. Drahtlose Kommunikationsvorrichtung nach Anspruch 5, **dadurch gekennzeichnet, dass** die Nahbereichs-Kommunikationseinheit (218) so angeordnet ist, dass sie die Aktualisierungsbenachrichtung an das Benutzeroberflächen-Aktualisierungselement (228) sendet.

9. Drahtlose Kommunikationsvorrichtung nach Anspruch 8, **dadurch gekennzeichnet, dass** die Nahbereichs-Kommunikationseinheit (218) eine Universal Integrated Circuit Card, nachfolgend als UICC bezeichnet, aufweist, und dass die UICC so angeordnet ist, dass sie eine Aktualisierungsbenachrichtigung, welche einen SIM-Toolkit-Vorgang umfasst, für das Benutzeroberflächen-Aktualisierungselement (228) bereitstellt.

10. Drahtlose Kommunikationsvorrichtung nach Anspruch 8, welche des Weiteren ein Nahbereichs-Kommunikationsmodem für die Kommunikation mit einem Lesegerät über eine Nahbereichs-Kommunikationsverbindung aufweist, und welches mit der Nahbereichs-Kommunikationseinheit (218) zur Bereitstellung einer Kommunikation zwischen dem Benutzeroberflächen-Aktualisierungselement (228) und der Nahbereichs-Kommunikationseinheit (218) gekoppelt ist, **dadurch gekennzeichnet, dass** die Nahbereichs-Kommunikationseinheit (218) so angeordnet ist, dass sie die Aktualisierungsbenachrichtung an das Benutzeroberflächen-Aktualisierungselement (228) über das Nahbereichs-Kommunikationsmodem sendet.

11. Drahtlose Kommunikationsvorrichtung nach einem der vorhergehenden Ansprüche, **dadurch gekennzeichnet, dass** das Benutzeroberflächen-Aktualisierungselement (228) so angeordnet ist, dass es zumindest die empfangenen Aktualisierungsinformationen von der Nahbereichs-Kommunikationseinheit (218) ansprechend auf den Empfang einer Aktualisierungsbenachrichtung, welche anzeigt, dass Aktualisierungsinformationen empfangen worden sind, abruft.

12. Drahtlose Kommunikationsvorrichtung nach Anspruch 11, **dadurch gekennzeichnet, dass** das Benutzeroberflächen-Aktualisierungselement (228) so angeordnet ist, dass es zumindest die aktualisierten zusammenfassenden Informationen von dem Datenbankelement (316) ansprechend auf den Empfang einer Aktualisierungsbenachrichtigung, welche anzeigt, dass Aktualisierungsinformationen empfangen worden sind, abruft.

13. Verfahren zur Aktualisierung mindestens eines Nahbereichs-Kommunikationsdienstes, welcher von einer drahtlosen Kommunikationsvorrichtung (102) bereitgestellt werden soll, wobei die drahtlose Kommunikationsvorrichtung (102) Folgendes aufweist: eine Nahbereichs-Kommunikationseinheit (218) zur Speicherung einer Vielzahl von Anwendungselementen (302-312) für die Verwendung bei der Bereitstellung einer Vielzahl von Nahbereichs-Kommunikationsdiensten und zur Speicherung eines Datenbankelements (316) zum Speichern von zusammenfassenden Informationen für die Vielzahl von Anwendungselementen (302-312), sowie ein Benutzeroberflächenelement (224) zur Leitung oder Verwaltung der Vielzahl von in der Nahbereichs-Kommunikationseinheit (218) gespeicherten Anwendungselementen, um die Vielzahl von Nahbereichs-Kommunikationsdiensten bereitzustellen, und um Informationen, welche die Vielzahl von Nahbereichs-Kommunikationsdiensten betreffen, für den Benutzer basierend auf von den zusammenfassenden Informationen erhaltenen Informationen bereitzustellen, wobei das Verfahren die folgenden Schritte umfasst:
Empfang an der drahtlosen Kommunikationsvorrichtung (102) von Aktualisierungsinformationen für einen Nahbereichs-Kommunikationsdienst und zum Transfer der empfangenen Aktualisierungsinformationen zu der Nahbereichs-Kommunikationseinheit (218), um die Nahbereichs-Kommuniktionseinheit zu aktualisieren und um die in dem Datenbankelement (316) für den Nahbereichs-Kommunikationsdienst gespeicherten zusammenfassenden Informationen zu aktualisieren, **dadurch gekennzeichnet, dass** die empfangenen Aktualisierungsinformationen zumindest eines der Folgenden einschließen: Befehle für das Hinzufügen eines neuen Anwendungselements, Befehle für die Aktualisierung eines oder mehrerer Parameter zumindest eines in der Nahbereichs-Kommunikationseinheit (218) gespeicherten Anwendungselements sowie Befehle für das Entfernen eines in der Nahbereichs-Kommunikationseinheit (218) gespeicherten Anwendungselements (302-312); und
Empfang von aktualisierten zusammenfassenden Informationen von dem Datenbankelement (316) und Aktualisierung der für den Benutzer von dem Benutzeroberflächenelement (224) bereitgestellten Informationen gemäß den empfangenen aktualisierten zusammenfassenden Informationen, welche von dem Datenbankelement (316) empfangen worden sind.

## Revendications

1. Dispositif de communication sans fil (102) destiné à fournir au moins un service de communication en champ proche à un utilisateur, le dispositif de communication sans fil (102) comprenant :
une unité de communication en champ proche (218) destinée à stocker une pluralité d'éléments d'application (302 - 312) à utiliser dans le cadre de la fourniture d'une pluralité de services de communication en champ proche, et à stocker un élément de base de données (316) en vue de stocker des informations sommaires pour la pluralité d'éléments d'application (302 - 312) ;
un élément d'interface utilisateur (224) destiné à gérer la pluralité d'éléments d'application stockée dans l'unité de communication en champ proche (218), en vue de fournir les services de communication en champ proche et de fournir des informations relatives aux services de communication en champ proche à l'utilisateur, sur la base d'informations obtenues à partir des informations sommaires ;
un élément de réception (226) destiné à recevoir des informations de mise à jour pour un service de communication en champ proche, et à transférer les informations de mise à jour reçues à l'unité de communication en champ proche (218) en vue de mettre à jour l'unité de communication en champ proche (218) et de mettre à jour les informations sommaires stockées dans l'élément de base de données (316) pour le service de communication en champ proche, dans lequel les informations de mise à jour reçues comportent au moins l'une des instructions suivantes : des instructions visant à ajouter un nouvel élément d'application, des instructions visant à mettre à jour un ou plusieurs paramètres d'au moins un élément d'application stocké dans l'unité de communication en champ proche (218), et des instructions visant à supprimer un élément d'application (302 - 312) stocké dans l'unité de communication en champ proche (218) ; et
un élément de mise à jour d'interface utilisateur (228) destiné à recevoir des informations sommaires mises à jour en provenance de l'élément de base de données (316), et à mettre à jour les informations fournies à l'utilisateur par l'élément d'interface utilisateur (224) selon les informations sommaires mises à jour reçues, lesquelles ont été reçues à partir de l'élément de base de données (316).

2. Dispositif de communication sans fil selon la revendication 1, dans lequel les informations sommaires comportent au moins l'un des éléments ci-dessous :
une liste de la pluralité de services de communication en champ proche associés à la pluralité d'éléments d'application stockés (302 - 312) ;
une liste de différents types de services de communication en champ proche fournie par la pluralité de services de communication en champ proche ; et
au moins un paramètre de chaque élément de la pluralité d'éléments d'application (302 - 312), ledit au moins un paramètre d'un élément d'application incluant l'un des éléments suivants : une représentation graphique de l'élément d'application, un identifiant de l'élément d'application, et un code de verrouillage pour l'élément d'application.

3. Dispositif de communication sans fil selon la revendication 1 ou 2, dans lequel les instructions visant à mettre à jour un ou plusieurs paramètres incluent des informations de personnalisation pour mettre à jour un ou plusieurs paramètres selon des détails d'utilisateur.

4. Dispositif de communication sans fil selon l'une quelconque des revendications précédentes, dans lequel l'élément de réception (226) est agencé de manière à recevoir des informations de mise à jour en provenance d'un serveur par liaison radio (112).

5. Dispositif de communication sans fil selon l'une quelconque des revendications précédentes, dans lequel l'élément de mise à jour d'interface utilisateur (228) est agencé de manière à recevoir une notification de mise à jour indiquant que des informations de mise à jour ont été reçues.

6. Dispositif de communication sans fil selon la revendication 5, dans lequel l'élément de réception (226) est agencé de manière à envoyer la notification de mise à jour à l'élément de mise à jour d'interface utilisateur (228) lorsque des informations de mise à jour ont été reçues.

7. Dispositif de communication sans fil selon la revendication 6, dans lequel l'élément de mise à jour d'interface utilisateur (228) est agencé de manière à recevoir les informations de mise à jour reçues en provenance de l'élément de réception (226) en réponse à la réception de la notification de mise à jour.

8. Dispositif de communication sans fil selon la revendication 5, dans lequel l'unité de communication en champ proche (218) est agencée de manière à envoyer la notification de mise à jour à l'élément de mise à jour d'interface utilisateur (228).

9. Dispositif de communication sans fil selon la revendication 8, dans lequel l'unité de communication en champ proche (218) comprend une carte de circuit intégré universelle, ci-après appelée carte UICC, et la carte UICC est agencée de manière à fournir une notification de mise à jour comprenant un événement de trousse à outils SIM à l'élément de mise à jour d'interface utilisateur (228).

10. Dispositif de communication sans fil selon la revendication 8, comprenant en outre un modem de communication en champ proche destiné à communiquer avec un lecteur sur une liaison de communication en champ proche, et lequel est couplé à l'unité de communication en champ proche (218) en vue de fournir une communication entre l'élément de mise à jour d'interface utilisateur (228) et l'unité de communication en champ proche (218), dans lequel l'unité de communication en champ proche (218) est agencée de manière à envoyer la notification de mise à jour à l'élément de mise à jour d'interface utilisateur (228) par l'intermédiaire du modem de communication en champ proche.

11. Dispositif de communication sans fil selon l'une quelconque des revendications précédentes, dans lequel l'élément de mise à jour d'interface utilisateur (228) est agencé de manière à extraire au moins les informations de mise à jour reçues de l'unité de communication en champ proche (218) en réponse à la réception d'une notification de mise à jour indiquant que des informations de mise à jour ont été reçues.

12. Dispositif de communication sans fil selon la revendication 11, dans lequel l'élément de mise à jour d'interface utilisateur (228) est agencé de manière à extraire au moins les informations sommaires mises à jour de l'élément de base de données (316), en réponse à la réception d'une notification de mise à jour indiquant que des informations de mise à jour ont été reçues.

13. Procédé de mise à jour d'au moins un service de communication en champ proche devant être fourni par un dispositif de communication sans fil (102), le dispositif de communication sans fil (102) présentant une unité de communication en champ proche (218) destinée à stocker une pluralité d'éléments d'application (302 - 312) à utiliser dans le cadre de la fourniture d'une pluralité de services de communication en champ proche, et à stocker un élément de base de données (316) en vue de stocker des informations sommaires pour la pluralité d'éléments d'application (302 - 312) et un élément d'interface utilisateur (224) destiné à gérer la pluralité d'éléments d'application stockée dans l'unité de communication en champ proche (218), en vue de fournir la pluralité de services de communication en champ proche et de fournir des informations relatives aux services de communication en champ proche à l'utilisateur, sur la base d'informations obtenues à partir des informations sommaires, le procédé consistant à :
recevoir, au niveau du dispositif de communication sans fil (102), des informations de mise à jour pour un service de communication en champ proche, et transférer les informations de mise à jour reçues à l'unité de communication en champ proche (218) en vue de mettre à jour l'unité de communication en champ proche et de mettre à jour les informations sommaires stockées dans l'élément de base de données (316) pour le service de communication en champ proche, dans lequel les informations de mise à jour reçues comportent au moins l'une des instructions suivantes : des instructions visant à ajouter un nouvel élément d'application, des instructions visant à mettre à jour un ou plusieurs paramètres d'au moins un élément d'application stocké dans l'unité de communication en champ proche (218), et des instructions visant à supprimer un élément d'application (302 - 312) stocké dans l'unité de communication en champ proche (218) ; et
recevoir des informations sommaires mises à jour en provenance de l'élément de base de données (316), et mettre à jour les informations fournies à l'utilisateur par l'élément d'interface utilisateur (224) selon les informations sommaires mises à jour reçues, lesquelles ont été reçues à partir de l'élément de base de données (316).
